# FASCICULE DE BREVET EUROPEEN

(11) **EP 2 894 959 B1**
(45) Date de publication et mention de la délivrance du brevet: **02.11.2016**
(21) Numéro de dépôt: 13773295.4
(22) Date de dépôt: 13.09.2013
(51) Int. Cl.: A01D 34/416

(54) **TETE DE COUPE ROTATIVE A FILS ET ENSEMBLE COMPOSE D'UNE TELLE TETE ET D'UN ARBRE D'ENTRAINEMENT DE LADITE TETE**
ROLLSCHNEIDKOPF MIT DRÄHTEN SOWIE ANORDNUNG AUS EINEM DERARTIGEN KOPF UND EINER ANTRIEBSWELLE ZUR STEUERUNG DES KOPFES
ROTARY CUTTING HEAD WITH WIRES AND ASSEMBLY CONSISTING OF SUCH A HEAD AND A DRIVE SHAFT FOR DRIVING SAID HEAD

(30) Priorité: 14.09.2012 FR 1258674
(43) Date de publication de la demande: 22.07.2015
(73) Titulaire: PELLENC (Société Anonyme), 84120 Pertuis (FR)
(72) Inventeur: PELLENC, Roger, F-84120 Pertuis (FR); BLACHE, Matthieu, F-84240 La Tour D'aigues (FR)
(74) Mandataire: Nuss, Laurent
(86) Numéro de dépôt international: PCT/FR2013/052107
(87) Numéro de publication internationale: WO 2014/041316

(56) Documents cités:
- EP-A1- 1 421 840
- EP-A1- 1 586 231
- EP-A1- 2 380 424
- WO-A1-2006/017372
- WO-A1-2008/139246
- US-A1- 2004 128 840
- US-A1- 2010 287 780

## Description

La présente invention concerne le domaine des appareils de coupe portables motorisés comportant des éléments de coupe rotatifs sous forme de fils flexibles ou rigides et a pour objet une tête de coupe à fils rotative pour débroussailleuse, coupe-herbe, coupe-bordure, taille-haie ou analogue. Elle a également pour objet un ensemble composé d'une telle tête et d'un arbre d'entraînement de ladite tête.

De façon générale, un appareil de coupe portable motorisé comprend un manche comportant, généralement à l'une de ses extrémités, un moteur thermique ou électrique et une poignée, généralement en U ou ronde, de guidage et de commande du moteur et, à son autre extrémité, une tête de coupe à fils rotative. Il existe aussi des systèmes dans lesquels le moteur électrique se trouve à l'extrémité de la tête de coupe. Chacun de ces systèmes comprend également un arbre moteur ou arbre d'entraînement qui est mu en rotation par le moteur et est engagé dans un moyeu orienté et disposé axialement dans la tête pour assurer la transmission du couple d'entraînement à cette dernière.

Ces têtes de coupe sont adaptées pour recevoir et maintenir un ou plusieurs fils flexibles, généralement un nombre pair de façon à équilibrer le mouvement et le plus souvent deux fils disposés symétriquement par rapport à l'axe de la tête. Chaque fil est fixé dans la tête par blocage de l'une de ses extrémités et dépasse radialement de cette dernière vers l'extérieur par son autre extrémité, ce de sorte à former, en combinaison avec la rotation de la tête, un ou plusieurs couteaux ou brins de fil de coupe à l'extérieur de la tête, généralement deux brins de fil de coupe diamétralement opposés par rapport à l'axe de la tête.

Parmi ces têtes de coupe certaines utilisent un ou plusieurs fils courts que l'utilisateur remplace dès que le degré d'usure du brin de fil de coupe est trop élevé. D'autres têtes utilisent des fils longs et possèdent à cet effet un réservoir, c'est-à-dire un espace ou une chambre située dans la tête permettant de prolonger le brin de fil de coupe sur une grande longueur à l'intérieur de la tête en l'enroulant, sous la forme d'un enroulement hélicoïdal, autour d'une paroi cylindrique, dit bobineau, disposé(e) dans la tête, ce aux fins de constituer une réserve ou une bobine dé fil évitant de remplacer fréquemment le ou les fils en cas d'usure ou de sectionnement du brin de fil de coupe.

Dans ce type de tête avec enroulement, certaines permettent à l'utilisateur de dévider le fil enroulé par une action manuelle au niveau de la tête ou de façon semi-automatique, par un système connu sous le nom de « tap and go », au fur et à mesure de son usure, c'est-à-dire grâce à une frappe effectuée sur la tête en cours de fonctionnement libérant une longueur de fil donnée grâce à la combinaison avec la force centrifuge générée par la rotation de la tête. D'autres têtes avec enroulement sont adaptées pour permettre un dévidement automatique du fil enroulé au moyen d'un moteur électrique ou par la seule force centrifuge.

Par ailleurs, ces têtes de coupe comprennent une enveloppe de protection ou carter comportant autant d'orifices de passage ou d'oeillets que de brins de fils de coupe et permettant le prolongement de ces derniers à l'intérieur de la tête pour leur fixation au moyen d'un mécanisme de serrage et/ou leur enroulement sur une bobine logée à l'intérieur de la tête.

Le document WO 2006/017372 décrit une tête de coupe à fils rotative utilisant des fils courts, c'est-à-dire sans enroulement de ces derniers dans la tête et notamment de deux ou quatre fils courts s'étendant de façon diamétralement opposé vers l'extérieur de la tête. Chaque fil court est bloqué dans la tête par pincement, de manière détachable, dans une chambre substantiellement close au moyen d'un mécanisme de pincement incluant un élément de serrage mobile associé à un ressort, c'est-à-dire que chaque élément de serrage comporte son propre ressort, chaque ressort tendant à presser l'élément de serrage associé contre l'extrémité proximale du brin de coupe engagé dans ladite chambre.

Toutefois, une tête de coupe du type de celle décrite dans le document WO 2006/017372, qui est uniquement adaptée pour recevoir des fils courts, nécessite une action manuelle pour agir sur chaque élément de serrage afin d'éloigner ce dernier du fil en allant à l'encontre de l'action antagoniste exercée par le ressort pour permettre le retrait ou l'insertion du fil de la tête de coupe. Ce type de tête qui nécessite une neutralisation ou une action allant à l'encontre de chaque ressort par une action manuelle spécifique pour libérer chaque fil en vue de leur remplacement est donc très contraignante pour l'utilisateur, nécessitant de façon systématique un nettoyage préalable de la tête au niveau de chaque mécanisme actionneur des ressorts.

Le document FR 2 781 976 a pour objet une tête de coupe comprenant deux fils qui viennent s'intégrer dans une bobine à double chambre, une pour chaque fil, les deux chambres sont superposées, en considérant une orientation verticale de l'axe de rotation de ladite tête à l'état de travail de cette dernière, et sont séparées par une cloison radiale positionnée à l'intérieur de la tête au niveau des oeillets de sortie du fil de la tête de coupe. La tête comprend également un mécanisme de blocage par frottement qui est logé dans la cloison radiale et est constitué d'un guide ou d'un canal d'insertion se rétrécissant à l'intérieur de la tête pour insérer le fil concerné et bloquer ce dernier par frottement sur une certaine longueur.

Toutefois, une tête du type de celle décrite dans le document FR 2 781 976 possède plusieurs inconvénients. Tout d'abord la localisation des oeillets de sortie en face de la cloison radiale séparant les deux chambres superposées génère un positionnement de chaque fil éloigné du côté d'extrémité inférieur de la tête c'est-à-dire, à l'état de travail de cette dernière, relativement haut par rapport au sol, nécessitant pour des coupes rases de forcer le frottement de la tête au sol ce qui accentue l'usure et le coût de remplacement des pièces d'usure, voire d'incliner la tête ce qui génère un frottement excessif de chaque brin de fil de coupe avec le sol et augmente de fait leur usure et leur consommation. D'autre part, la dimension de chaque canal d'insertion d'un fil permettant son frottement est limitée à l'utilisation d'un seul diamètre de fil et chaque fil de diamètre différent ou de forme différente modifie notablement l'effet de blocage par frottement, qui peut être insuffisant et entraîner un détachement du fil de la tête en cours de fonctionnement. Un tel détachement entraîne une perte de quantité de fil importante qui va bien au-delà de la distance initiale entre le brin de fil de coupe et son extrémité au moment de son introduction initiale dans la tête. En outre, pour assurer un effort de blocage par frottement suffisant du fil de manière à maintenir celui-ci en début de bobinage ou d'enroulement, la longueur de chaque canal doit être importante, ce qui génère en fin d'enroulement une perte importante de longueur de fil qui pourrait être utilisable pour former un brin de fil de coupe. Enfin ce type de tête n'est pas adapté pour des fils courts.

La présente invention a pour but de pallier ces inconvénients en proposant une tête de coupe à fils rotative pour débroussailleuse, coupe-herbe, coupe-bordure, taille-haie ou analogue, d'un coût de revient peu élevé et adaptée pour recevoir des fils de coupe longs ou courts, rigides ou souples, de formes et de dimensions variées, tout en incorporant un nombre réduit de pièces d'usure et en assurant un remplacement rapide de chaque fil de coupe et, le cas échéant, un enroulement rapide de chaque fil. Par ailleurs, une telle tête selon la présente invention permet d'optimiser l'utilisation du fil de coupe en limitant ou en réduisant la longueur de fil restante ou inutilisable s'étendant dans la tête lorsque le fil est usé, détérioré ou sectionné et/ou, le cas échéant, entièrement déroulé.

A cet effet, la tête de coupe rotative à fils, selon la présente invention, pour débroussailleuse, coupe-herbe, coupe-bordure, taille-haie ou analogue, ladite tête comprenant, d'une part, un moyeu s'étendant centralement et axialement dans cette dernière pour recevoir un arbre d'entraînement de sorte à permettre, grâce à des moyens de liaison et de transmission du couple d'entraînement, l'entraînement en rotation de ladite tête autour de son axe de rotation et des moyens de verrouillage axial de la tête sur l'arbre d'entraînement et, d'autre part, un carter abritant un corps support qui comprend un système de blocage d'au moins deux fils de coupe ou de tonte courts ou longs et, éventuellement, un axe d'enroulement, de préférence solidaire du corps support, permettant, le cas échéant, l'enroulement de chaque fil long dans ladite tête qui comprend en outre des moyens de connexion entre le carter et le corps support, et dont ledit moyeu est solidaire du carter et/ou du corps support et ledit carter comprend au moins deux orifices pour le passage desdits fils au travers de ce dernier, se caractérise en ce que le système de blocage comprend, d'une part, au moins deux éléments de blocage mobiles, indépendants l'un de l'autre, et associés chacun à une surface de serrage intégrée dans le corps support et comprenant une face de serrage et une face d'appui et, d'autre part, un unique organe élastique capable d'exercer et d'appliquer une contrainte sur la face d'appui de chaque élément de blocage permettant de serrer et de bloquer chaque fil entre la face de serrage de l'élément de blocage concerné et la surface de serrage associée et en ce que, éventuellement, le corps support et le carter sont adaptés pour être montés en rotation l'un par rapport à l'autre, en vue de permettre, le cas échéant, l'enroulement de chaque fil long, à l'état de serrage et de blocage, autour de l'axe d'enroulement.

La présente invention a également pour objet un ensemble tête de coupe rotative à fils pour débroussailleuse, coupe-herbe, coupe-bordure, taille-haie ou analogue et arbre d'entraînement pour appareil de coupe portable motorisé, ledit arbre d'entraînement étant apte à être monté dans le moyeu de ladite tête pour assurer la transmission du couple d'entraînement à cette dernière, ladite tête de coupe présentant les caractéristiques de la tête de coupe définies suivant la présente invention et se caractérise en ce que les moyens de verrouillage axial comprennent des moyens de commande et sont adaptés, d'une part, pour commander et permettre, le cas échéant à partir d'un état d'insertion avec pré-serrage de chaque fil et de précontrainte de l'unique organe élastique, le verrouillage ou le déverrouillage axial de la tête sur l'arbre d'entraînement et, d'autre part, soit, à l'état de verrouillage, pour établir la contrainte de l'organe élastique sur les éléments de blocages permettant de réaliser le serrage et le blocage de chaque fil dans la tête et, à l'état de déverrouillage, pour supprimer ladite contrainte de serrage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective de la tête de coupe selon la présente invention, comprenant deux brins de fil de coupe formant chacun un élément de coupe, dans une configuration renversée de la tête (en considérant une orientation verticale de l'axe de rotation de la tête ou à l'état de travail de cette dernière),
- la figure 2 montre une vue en perspective, en coupe partielle et en éclatée d'un ensemble selon la présente invention composé de la tête de coupe telle que orientée et représentée sur la figure 1, sans les fils de coupe, et d'un arbre d'entraînement monté dans le carter de ladite tête,
- la figure 3 montre une vue en coupe transversale de l'ensemble représenté sur la figure 2, sans les fils de coupe, à l'état monté de la tête et dans une configuration pennettant la rotation libre du carter par rapport au corps support,
- la figure 4 montre la tête de coupe représentée sur la figure 1, à l'état monté de la tête et dans une configuration de la tête prête à recevoir les fils et permettant la rotation libre du carter par rapport au corps support,
- la figure 5 montre une vue en coupe transversale de l'ensemble représenté sur la figure 4,
- la figure 6 montre l'ensemble représenté sur la figure 5 avec les deux fils insérés dans la tête et à l'état de pré-serrage de ces derniers,
- la figure 7 montre l'ensemble représenté sur la figure 5 avec les deux fils de coupe insérés dans la tête et à l'état de serrage et de blocage final des fils et à l'état de connexion entre la tête et le corps support empêchant la rotation de l'une de ces dernières par rapport à l'autre,
- la figure 8 montre une vue en perspective de la tête de coupe représentée sur la figure 1 avec une vue partielle du carter.

Les figures montrent une tête de coupe rotative à fils, selon la présente invention, pour débroussailleuse, coupe-herbe, coupe-bordure, taille-haie ou analogue, ladite tête comprenant, d'une part, un moyeu 18, 19 s'étendant centralement et axialement dans cette dernière pour recevoir un arbre d'entraînement 20 de sorte à permettre, grâce à des moyens de liaison et de transmission du couple d'entraînement 21, 22, l'entraînement en rotation de ladite tête autour de son axe de rotation X et des moyens de verrouillage axial 23, 24, 28 de la tête sur l'arbre d'entraînement 20 et, d'autre part, un carter 1 abritant un corps support 2 qui comprend un système de blocage 3, 3', 4, 4', 12 d'au moins deux fils 5, 5' de coupe ou de tonte courts ou longs et, éventuellement, un axe d'enroulement 6, de préférence solidaire du corps support 2, permettant, le cas échéant, l'enroulement de chaque fil 5, 5' long dans ladite tête qui comprend en outre des moyens de connexion 7, 8 entre le carter 1 et le corps support 2, et dont ledit moyeu 18, 19 est solidaire du carter 1 et/ou du corps support 2 et ledit carter comprend au moins deux orifices 9, 9', tels que par exemple des oeillets, pour le passage desdits fils au travers de ce dernier, plus particulièrement chaque fil 5, 5' au travers de chaque orifices 9, 9'.

Conformément à la présente invention, le système de blocage 3, 3', 4, 4', 12 comprend, d'une part, au moins deux éléments de blocage 3, 3' mobiles, indépendants l'un de l'autre, et associés chacun à une surface de serrage 4, 4' intégrée dans le corps support 2 et comprenant une face de serrage 10, 10' et une face d'appui 11, 11' et, d'autre part, un unique organe élastique 12 capable d'exercer et d'appliquer une contrainte sur la face d'appui 11, 11' de chaque élément de blocage 3, 3' permettant de serrer et de bloquer chaque fil 5, 5' entre la face de serrage 10, 10' de l'élément de blocage 3, 3' concerné et la surface de serrage 4, 4' associée. En outre, le corps support 2 et le carter 1 peuvent être adaptés pour être montés en rotation l'un par rapport à l'autre, de préférence autour de l'axe X de rotation de la tête, en vue de permettre, le cas échéant, l'enroulement de chaque fil 5, 5' long, à l'état de serrage et de blocage, autour de l'axe d'enroulement 6.

On comprend que la présente invention peut prévoir une tête de coupe adaptée uniquement pour recevoir des fils 5, 5' courts, c'est-à-dire sans prévoir d'axe d'enroulement 6 ou autre élément formant une bobine d'enroulement dans la tête, soit une tête adaptée pour recevoir des fils 5, 5' courts et des fils 5, 5' longs en comportant à cet effet l'axe d'enroulement 6 permettant l'enroulement des fils 5, 5' longs dans la tête et plus particulièrement dans une chambre d'enroulement agencée dans la tête et qui peut être délimitée par exemple entre une paroi périphérique du corps support 2 et la paroi interne du carter 1 comme nous le verrons en détail par la suite.

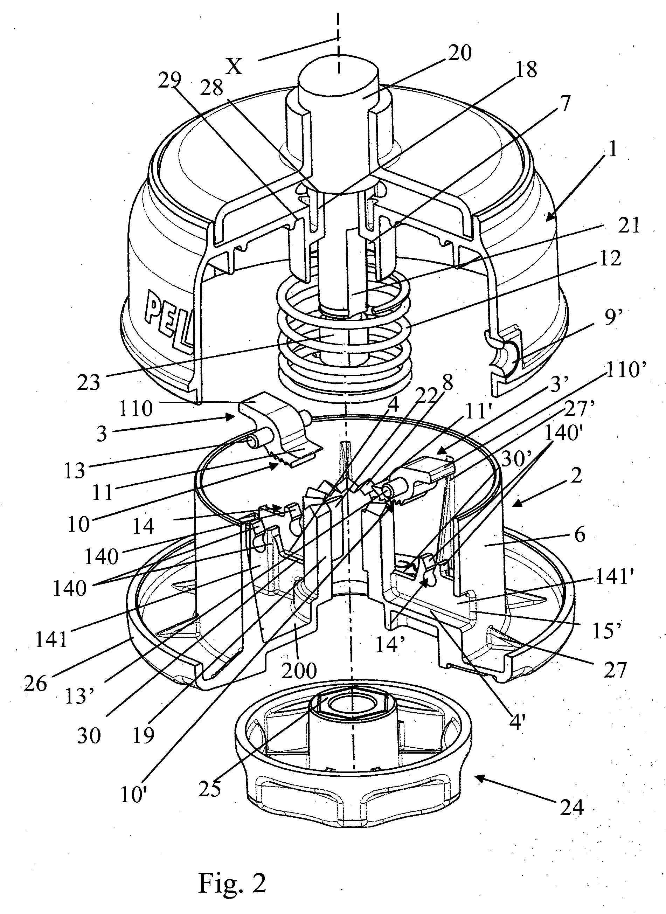

Dans un mode de réalisation préférentiel, chaque élément de blocage 3, 3' peut être monté pivotant autour d'un axe de pivotement 13, 13'. En outre, chaque axe de pivotement 13, 13' peut être solidaire de l'élément de blocage 3, 3' concerné et apte à être monté dans un palier 14, 14' fixé ou intégré, par l'intermédiaire d'un support de palier 141, 141', dans le corps support 2 (figures 2, 3, 5, 6, 7). Dans une variante, non représentée, chaque axe de pivotement peut être solidaire du corps support 2 et apte à être monté dans un palier fixé ou intégré dans l'élément de blocage 3, 3' concerné.

Par ailleurs, chaque élément de blocage 3, 3' pivotant peut comprendre une face de contact 110, 110' située de préférence en arrière de la face d'appui 11, 11' du côté opposé à celle-ci par rapport à l'axe de pivotement 13, 13'. De préférence la face de contact et la face d'appui de chaque élément de blocage peuvent être situées de part et d'autre d'un plan contenant l'axe de pivotement de ce dernier, ce afin de les désaxer l'une par rapport à l'autre pour permettre un espace de basculement de chaque face d'appui (figures 2, 3, 5, 6, 7). Une telle face de contact 110, 110' permet à un utilisateur d'effectuer, par une pression sur ladite face de contact, un basculement manuel de chaque élément de blocage 3, 3' éloignant chaque face de serrage 10, 10' de la surface de serrage 4, 4' associée pour libérer le fil 5, 5' concerné bloqué entre ces dernières.

De préférence, chaque surface de serrage 4, 4' peut s'étendre dans un plan sensiblement perpendiculaire ou incliné par rapport à l'axe de rotation (X) de la tête découpe et l'axe de pivotement 13, 13' de chaque élément de blocage 3, 3' peut s'étendre sensiblement parallèlement aux surfaces de serrage (figures 2, 3, 5, 6).

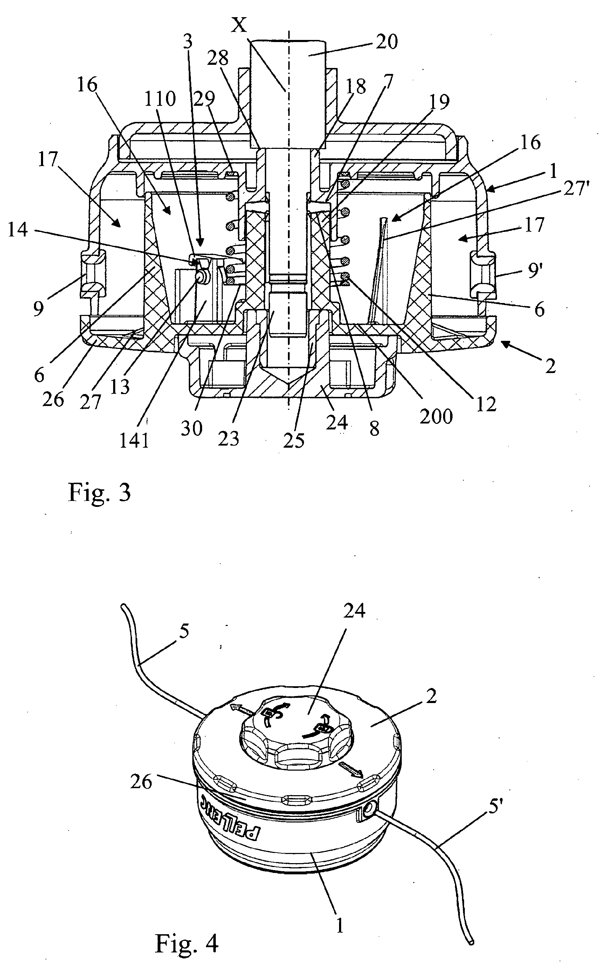

De préférence, chaque élément de blocage 3, 3', ou chaque palier 14, 14' peut être positionné dans la tête de préférence à proximité ou sensiblement au même niveau que le côté inférieur (en considérant une orientation verticale de l'axe de rotation de ladite tête à l'état de travail de cette dernière) de la tête, dont la face interne dudit côté inférieur peut être constitué par le fond 200 (figure 2 et figure 3) du corps support 2 ou de la paroi périphérique, ce de sorte à pouvoir positionner les fils de coupe 5, 5' et donc le plan de coupe à proximité du sol ou de la surface à couper et à permettre la réalisation de coupes rases sans forcer le frottement de la tête au sol ou sans devoir incliner la tête, notamment avec un angle d'inclinaison excessif, et donc à permettre une usure moindre de cette dernière et des brins de fil de coupe.

Dans un mode de réalisation préférentiel, l'axe d'enroulement 6 peut être fixé dans le corps support 2 et peut consister en la paroi périphérique, de préférence de forme cylindrique.

L'une des faces d'extrémité de la paroi périphérique cylindrique 6 peut être ouverte et l'autre face d'extrémité peut être fermée par un fond 200. En outre, lorsque chaque élément de blocage 3, 3' est monté pivotant, la présente invention peut prévoir que chaque support de palier 141, 141' peut être fixé sur ledit fond 200 (notamment figures 2 et 3).

Par ailleurs, le carter 1 peut présenter une forme globalement cylindrique en étant ouvert à l'une de ses extrémités ou semi-sphérique de sorte à pouvoir recevoir le corps support 2 et, le cas échéant, la paroi. périphérique formant l'axe d'enroulement 6. En outre cette dernière peut s'étendre latéralement, notamment au niveau de son fond, vers l'extérieur, par une collerette 26 apte à recevoir le bord libre du carter 1 en vue de permettre le guidage en rotation de ce dernier relativement au corps support 2 (figures). Une telle collerette 26 peut comporter des raidisseurs 27 pour en assurer sa rigidité structurelle et permettre notamment son obtention par un procédé de moulage par injection de matière. De même le corps support 2 peut également comprendre des raidisseurs 27', notamment entre son fond 200 et la paroi périphérique 6, pour la même raison.

Ainsi, dans le cas où le corps support 2 comprend l'axe d'enroulement 6 pour recevoir les fils 5, 5' longs, le corps support 2 peut présenter globalement une forme de bobine.

Dans le cas où chaque axe de pivotement 13, 13' peut être solidaire de l'élément de blocage 3, 3' concerné pivotant, la présente invention peut prévoir que chaque support de palier 141, 141' puisse présenter au moins une ouverture d'insertion de l'axe de pivotement 13, 13' dans le palier 14, 14' concerné et que chaque ouverture d'insertion puisse être délimitée par des parois déformables élastiquement 140, 140' de sorte que l'axe de pivotement 13, 13' de chaque élément de blocage 3, 3' puisse être inséré dans le palier 14, 14' concerné par emboîtement élastique réversible (notamment, figures 2 et 3). Un tel emboîtement permet notamment le démontage de chaque élément de blocage 3, 3' du corps support 2, ce aisément et sans l'utilisation d'un outil spécifique.

Si on se réfère plus particulièrement aux figures 2, 3, 5, 6 et 7 on peut voir que, dans une forme de réalisation préférentielle de chaque élément de blocage 3, 3', ceux-ci peuvent présenter chacun deux premières faces latérales opposées et deux secondes faces opposées sensiblement perpendiculaires auxdites premières faces, dont l'une desdites secondes faces opposées forme la face de serrage 10, 10' et l'autre seconde face opposée forme la face d'appui 11, 11'. En outre, l'axe de pivotement 13, 13' de chaque élément de blocage 3, 3' peut traverser sensiblement perpendiculairement lesdites premières faces ou peut être constitué, par exemple, par deux axes ou tourillons latéraux fixés chacun sur l'une desdites premières faces.

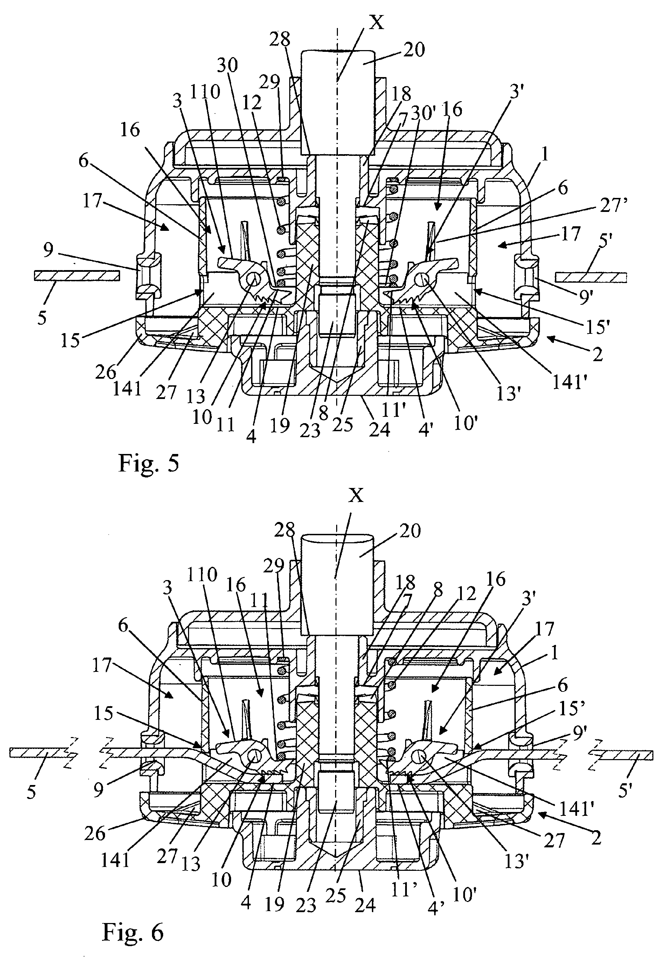

Dans une forme de réalisation préférentielle de chaque support de palier 141, 141', ceux-ci peuvent comprendre chacun deux flasques en vis-à-vis pouvant intégrer chacun un palier apte à recevoir, sensiblement perpendiculairement auxdits flasques, l'un des deux tourillons de l'élément de blocage 3, 3' concerné de sorte que chaque élément de blocage puisse être apte à pivoter entre les deux flasques correspondants (figures 2, 3, 5, 6 et 7). En outre, chaque surface de serrage 10, 10'. peut s'étendre entre les deux flasques de l'un desdits supports de palier et l'espace séparant les parois de chaque palier peut former un passage de réception et de guidage, s'étendant de préférence radialement par rapport à l'axe de rotation de la tête, pour chaque fil 5, 5' dans le corps support 2 en vue de son serrage et blocage (notamment figures 5, 6 et 7).

La paroi périphérique formant l'axe d'enroulement 6 peut comprendre deux ouvertures de passage 15, 15' permettant le passage de chaque fil 5, 5' à travers l'une de ces dernières.

En outre la tête selon la présente invention peut comprendre deux chambres 16 et 17 sensiblement concentriques, à savoir une chambre centrale 16 pouvant être délimitée entre le moyeu 18, 19 et la paroi périphérique 6 et pouvant recevoir le système de blocage 3, 3', 4, 4', 12 et une chambre périphérique 17 pouvant être délimitée entre ladite paroi périphérique et la paroi interne du carter 1 et pouvant recevoir, le cas échéant, l'enroulement de chaque fil 5, 5' (figures 3, 5, 6, 7 et 8). Plus particulièrement la chambre périphérique 17 peut être délimitée, le cas échéant, au niveau du fond 200 du corps support 2 par la collerette 26 coopérant avec le bord libre du carter 1.

Dans un mode de réalisation préférentiel, l'organe élastique 12 peut être un ressort, plus préférentiellement un ressort 12 hélicoïdal entourant coaxialement le moyeu 18, 19 qui traverse alors axialement ledit ressort (figures 2, 3, 5, 6, 7, 8).

De préférence, le moyeu 18, 19 peut comprendre, d'une part, une première partie de moyeu 18 solidaire ou intégrée dans le carter 1 et une seconde partie de moyeu 19 solidaire ou intégrée dans le corps support 2 et, d'autre part, des moyens de connexion 7, 8 permettant de connecter lesdites première et seconde parties de moyeu 18, 19 entre elles et dans le prolongement l'une de l'autre en empêchant leur rotation l'une par rapport à l'autre. En outre, lesdits moyens de connexion 7, 8 peuvent également former les moyens de connexion entre ledit carter 1 et ledit corps support 2 de sorte à permettre leur connexion ensemble, avec blocage en rotation l'un par rapport à l'autre, pour autoriser la rotation de la tête, verrouillée axialement sur l'arbre d'entraînement 20, ou leur déconnexion ou séparation pour permettre, notamment, le démontage de la tête ou l'accès aux éléments de blocage 3, 3' ou, dans le cas où le corps support 2 et le carter 1 sont adaptés pour être montés en rotation l'un par rapport à l'autre, l'enroulement de chaque fil 5, 5'. (figures 2, 3, 5, 6, 7).

Comme on peut le voir plus particulièrement sur la figure 2, les moyens de connexion 7, 8 peuvent consister, par exemple, en des stries pratiquées dans chaque partie de moyeu 18, 19. Plus particulièrement la seconde partie de moyeu 19 peut comporter des stries 8 pratiquées dans son bord d'extrémité libre et la première partie de moyeu 18 peut comporter un épaulement interne comportant des stries 7 de sorte à permettre l'emboîtement du bord strié de la seconde partie de moyeu 19 dans la première partie de moyeu 18 avec mise en contact des stries des parties respectives pour établi la connexion précitée (figures 2, 3, 5, 6, 7, 8).

De préférence, l'unique organe élastique 12 peut être un unique ressort hélicoïdal entourant coaxialement le moyeu 18, 19, sur toute ou partie de sa longueur. Le ressort hélicoïdal 12 peut être maintenu axialement entre une première face de butée 29 solidaire du carter 1 et par chaque face d'appui 11, 11' des éléments de blocage 3, 3'. On comprend que l'unique ressort peut alors être maintenu axialement dans la tête au moyen de ses spires terminal qui peuvent venir en appui, pour l'une de ses extrémités, contre la première face de butée 29, qui peut être fixée ou intégrée dans le carter 1, par exemple en étant formée par une partie du fond 200 du carter 1, et, pour l'autre extrémité du ressort, contre les faces d'appui 11, 11' des éléments de blocage 3, 3' (figures 2, 3, 5, 6, 7, 8).

Dans une caractéristique additionnelle, la tête peut comprendre une seconde face de butée 30, 30' et le ressort peut être maintenu axialement, à l'état de non insertion des fils 5, 5', entre la première face de butée 29 et la seconde face de butée 30, 30' qui forme alors une butée empêchant le ressort 12 de venir au contact des faces d'appui 11, 11' des éléments de blocage 3, 3', ce afin d'éviter, sous la contrainte du ressort 12, une mise en contact sous pression de chaque face de serrage 10, 10' avec les surfaces de serrage 4, 4' respective, à l'état de non insertion des fils 5, 5', dans la tête et donc une usure ou une détérioration desdites faces de serrage (notamment figures 2 et 5).

De préférence, la seconde face de butée 30, 30' peut être constituée par une face de chaque palier support 141, 141', par exemple par la face externe du côté libre de chaque flasque, du palier support 141, 141' concerné, opposé à leur côté de fixation (notamment figures 2 et 5).

Dans une forme de réalisation préférentielle, la première face de butée 29 peut être réglable en écartement axial, c'est-à-dire en rapprochement ou en éloignement axial, par rapport à chaque face d'appui 11, 11' ou, en l'absence de fil, à la seconde face de butée 30, 30' ce de sorte à pouvoir régler la force de rappel de l'unique ressort 12 et donc la contrainte exercée par ce dernier sur chaque élément de blocage 3, 3', que ce soit pour faciliter le pré-serrage lors de l'insertion de chaque fil 5, 5' ou à l'état d'insertion des fils 5, 5' pour réaliser leur serrage avec blocage.

Un tel réglage peut être effectué, par exemple, en déplaçant le corps support 2 dans le carter 1, par un déplacement axial relatif l'un par rapport à l'autre le long de l'axe de rotation X de la tête.

Les figures 2, 3, 5, 6, 7 et 8 montrent également un ensemble composé d'une tête de coupe rotative à fils, pour débroussailleuse, coupe-herbe, coupe-bordure, taille-haie ou analogue, et d'un arbre d'entraînement 20 pour appareil de coupe portable motorisé, ledit arbre d'entraînement 20 étant apte à être monté dans le moyeu 18, 19 de ladite tête pour assurer la transmission du couple d'entraînement à cette dernière, ladite tête présentant les caractéristiques définies suivant la présente invention.

Conformément à la présente invention, les moyens de verrouillage axial 23, 24, 28 comprennent des moyens de commande 24 et sont adaptés, d'une part, pour commander et permettre, éventuellement ou le cas échéant à partir d'un état de pré-serrage de chaque fil dès son insertion et de précontrainte de l'unique organe élastique, le verrouillage ou le déverrouillage axial de la tête sur l'arbre d'entraînement 20 et, d'autre part, soit, lors du verrouillage, pour établir, à l'état de verrouillage, la contrainte de serrage de l'organe élastique 12 sur les éléments de blocages 3, 3' par l'intermédiaire des faces d'appui 11, 11' permettant de réaliser le serrage et le blocage de chaque fil 5, 5' dans la tête et, à l'état de déverrouillage, pour supprimer la contrainte de serrage.

Les moyens de verrouillage axial 23, 24, 28 peuvent également être adaptés, le cas échéant, soit, à l'état de verrouillage, pour établir la connexion, grâce aux moyens de connexion et de blocage 7, 8, entre les première et seconde parties de moyeu 18, 19, soit, à l'état de déverrouillage, pour établir, sous l'action de l'unique organe élastique 12 exerçant une contrainte allant à l'encontre de ladite connexion, la déconnexion entre lesdites première et seconde parties de moyeu.

Dans un mode de réalisation préférentiel de l'ensemble, l'arbre d'entraînement 20 peut se terminer à son extrémité libre par un embout 23 de liaison et les moyens de verrouillage 23, 24, 28 peuvent comprendre l'embout 23 et une pièce de commande 24, formant lesdits moyens de commande, montée en rotation, autour de l'axe X de ladite tête, sur ledit embout. La pièce de commande 24 peut coopérer avec le corps support 2 de sorte que la rotation de la pièce de commande 24 puisse entraîner un déplacement en translation du corps support 2 dans le carter 1, le long de l'axe de rotation X de la tête, pouvant permettre, selon le sens de rotation de ladite pièce, soit, dans un sens de rotation permettant de réaliser le verrouillage, d'établir la contrainte de serrage et, le cas échéant, la connexion entre les première et seconde parties de moyeu 18, 19 soit, dans un sens de rotation permettant de réaliser le déverrouillage, de supprimer ou de diminuer la contrainte de serrage et, le cas échéant, la déconnexion entre lesdites première et seconde parties de moyeu.

On comprend que l'établissement de la contrainte de serrage est obtenu soit directement à parti d'un état sans pré-serrage des fils 5, 5' du fait d'une précontrainte de l'unique organe élastique 12 sur les éléments de blocage pouvant être prévue parla présente invention ou suite à ladite précontrainte et dans ce cas l'établissement de la contrainte de serrage correspondra à une augmentation de la contrainte de pré-serrage.

Dans un mode de réalisation préférentiel de l'embout 23, celui-ci peut comporter, sur sa face latérale externe, un filetage et la pièce de commande 24 peut comporter un taraudage, par exemple intégré dans un écrou 25 solidaire de la pièce de commande 24, permettant d'assurer une liaison par vissage entre la pièce de commande 24 et l'embout 23 et la rotation de cette dernière en vue de réaliser les effets précités selon le sens de rotation de la pièce de commande 24.

Dans un mode de réalisation préférentiel de l'ensemble, les moyens de liaison et de transmission du couple d'entraînement 21, 22 permettant d'assurer la transmission du couple d'entraînement entre l'arbre d'entraînement 20 et le moyeu 18, 19 peuvent consister en des premiers moyens de liaison 21 solidaires de l'arbre d'entraînement 20 et en des seconds moyens de liaison 22 solidaires de la seconde partie de moyeu 19 de sorte que le carter 1, par l'intermédiaire de la première partie de moyeu 18, puisse être monté librement en rotation sur l'arbre d'entraînement 20 et que le corps support 2 puisse assurer, après verrouillage de la pièce de commande 24, la transmission du couple d'entraînement au moyeu 18, 19 et donc à la tête de coupe (notamment figure 2).

On notera que la présente invention peut prévoir un blocage en translation du carter sur l'arbre d'entraînement 20 qui peut comporter à cet effet un épaulement 28 venant en butée, lors de son insertion dans le moyeu 18, 19, contre une butée du carter 1, formée par exemple par un bord de la première partie de moyeu 18 du carter (figures 2, 3, 5, 6, 7, 8).

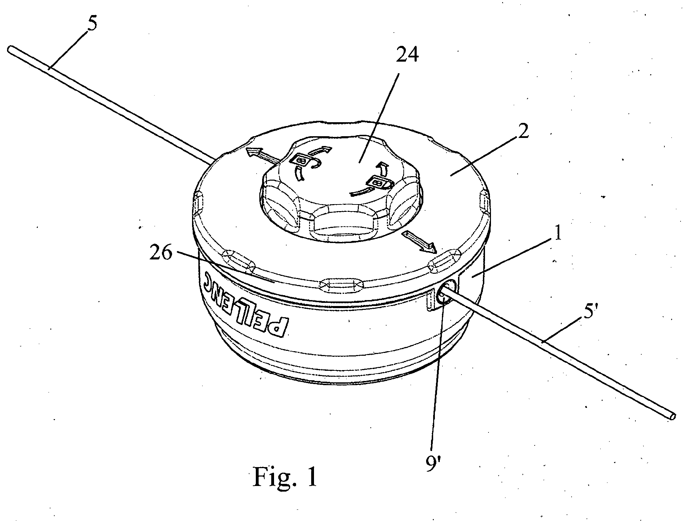

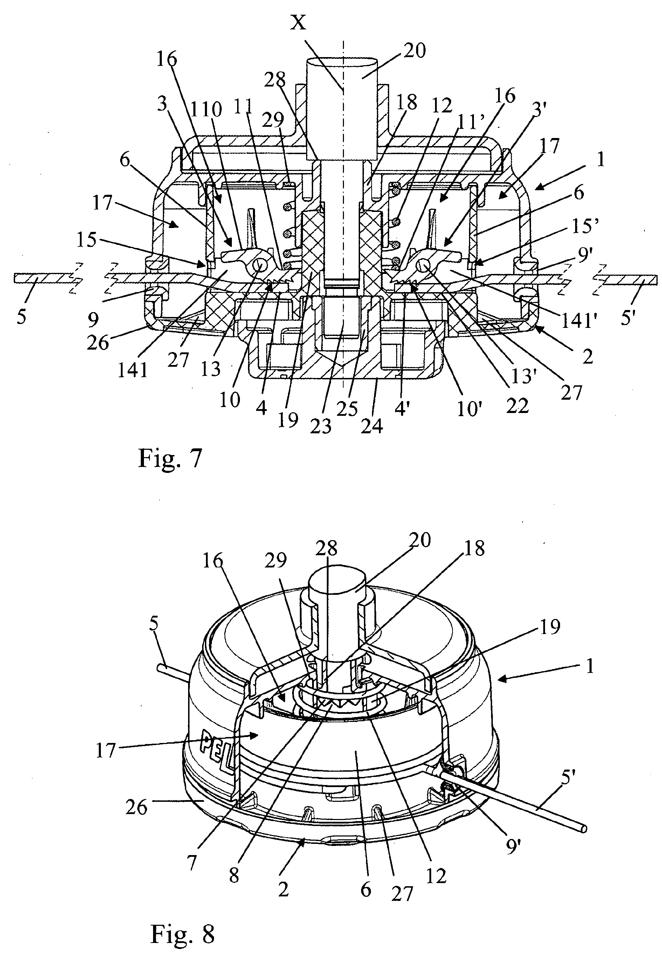

La tête et l'ensemble selon la présente invention peuvent ainsi être mis successivement dans un mode d'insertion (figure 5) de chaque fil 5, 5', courts ou longs, le cas échéant dans un mode de pré-serrage (figure 6) de chaque fil 5, 5' inséré et dans un mode de serrage et de blocage (figure 7) de chaque fil 5, 5' dans la tête. Au préalable de ces modes, la tête peut être montée ou commandée de sorte à laisser libre la rotation entre le carter 1 et le corps support 2. Ladite commande, à partir d'un état où la tête comprend déjà des fils 5, 5' insérés, peut consister, pour l'utilisateur, à agir sur la pièce de commande 24 en la faisant tourner autour de l'axe de rotation X de la tête de sorte à déconnecter les deux parties de moyeu 18 et 19, sous l'action de l'unique organe élastique 12, et donc à séparer et à libérer la rotation du carter 1 et du corps support 2 l'un par rapport à l'autre. D'autre part, un repère peut être réalisé sur la face externe du corps support 2, tel que par exemple une flèche gravée (figures 1 et 4) de sorte à permettre le positionnement de chaque élément de blocage 3, 3', plus particulièrement chaque ouverture de passage 15, 15' en regard de chaque oeillet 9, 9'. Ainsi dans le mode insertion, l'utilisateur peut alors engager chaque fil 5, 5' au travers de l'oeillet 9, 9' correspondant vers l'élément de blocage 3, 3' concerné, plus particulièrement entre les deux flasques 141, 141' de chaque palier 14, 14' et entre la face de serrage 10, 10' de l'élément de blocage concerné et la surface de serrage 4, 4' correspondante du corps support 2. Chaque fil 5, 5' peut être engagé, éventuellement jusqu'à être en butée avec la paroi externe du moyeu 18, 19 pour informer l'utilisateur du bon positionnement du fil 5, 5'.

Dans ce mode d'insertion, le ressort peut être agencée de sorte que la contrainte exercée sur chaque élément de blocage 3, 3' soit nulle. De préférence le ressort peut être agencée de sorte que la contrainte exercée sur chaque élément de blocage 3, 3' soit inférieure à la contrainte de serrage de sorte à établir une précontrainte sur les éléments de serrage autorisant l'insertion de chaque fil 5, 5' entre la face de serrage 10, 10' de l'élément de blocage 3, 3' concerné et la surface de serrage 4, 4' associée tout en assurant un pré-serrage de chaque fil 5, 5' permettant de retenir et de maintenir ce dernier dans la tête. Le pré-serrage permet en outre de réaliser, en cas de fils longs, et grâce à leur maintien par l'une de leurs extrémités libres dans la tête, leur enroulement dans la chambre périphérique 17 autour de la paroi périphérique 6 par la rotation relative entre le corps support 2 et le carter 1 et ce quel que soit le sens de l'enroulement.

Puis, une fois chaque fil 5, 5' inséré, en réalisant de préférence le pré serrage de chaque fil 5, 5', l'utilisateur, dans le mode de serrage peut procéder à la connexion du carter 1 avec le corps support 2, le cas échéant avec verrouillage en position de rotation de la tête sur l'arbre d'entraînement, ce en agissant, le cas échéant, sur la pièce de commande 24 en la faisant tourner de sorte à réaliser le verrouillage en position de rotation de la connexion des deux parties de moyeu 18, 19 entre elles et à solliciter l'unique organe élastique 12 pour appliquer la contrainte de serrage sur la face d'appui 11, 11' de chaque élément de blocage 3, 3'. Une telle contrainte a pour effet, sous l'action combinée de chaque élément de blocage 3, 3' et, le cas échéant des dents pratiquées dans les faces de serrage 10, 10' et de la pression exercée par la contrainte de l'unique organe élastique 12, d'établir ou, en cas de pré-serrage, d'augmenter le serrage des fils 5, 5' entre lesdites surfaces de serrage 4, 4' et les faces d'appui 10, 10'. A l'état de serrage et de verrouillage de la tête, les fils 5, 5' ne peuvent plus être retirés en sens inverse.

On notera qu'en fin d'enroulement de fils 5, 5' longs, ou lorsque les brins de fils 5, 5' courts formant les éléments de coupe sont usagés, la partie de fil restante entre chaque oeillet 9, 9' et leur point de blocage dans la tête est limitée et réduite ce qui permet d'optimiser la longueur de fil ne pouvant être utilisée contrairement aux systèmes actuels dont la partie de fil restante dans la tête est de plus grande longueur ou dont les systèmes de serrage insuffisants induisent leur desserrage prématuré et l'éjection d'une quantité de fil importante pendant le fonctionnement de la tête.

Plus particulièrement on comprendra que dans le cas de fils 5, 5' longs, une fois que ces derniers sont engagés ou enclenchés entre les faces de serrage 10, 10' des éléments de blocage 3, 3' et les surfaces de serrage 4, 4' associées, l'utilisateur n'a plus qu'à tourner le corps support 2 relativement au carter 1, dans n'importe lequel des deux sens de rotation possibles autour de l'axe de rotation de la tête, afin d'enrouler ou de bobiner les fils autour de la paroi périphérique 6 dans la chambre périphérique 17, puis, en fin d'enroulement ou de bobinage de couper la partie des fils sortant de la tête à la longueur souhaitée pour former les brins de fil de coupe. De même, dans le cas de fils 5, 5' courts, une fois chaque fil 5, 5' inséré en position de serrage, l'utilisateur n'a plus qu'à utiliser la tête de coupe telle quelle ou à couper chaque fil 5, 5' pour obtenir la longueur de brin de fil de coupe souhaitée.

Pour l'enlèvement ou le retrait de chaque fil 5, 5' usagé de la tête, l'utilisateur peut, le cas échéant, tourner ou dévisser complètement la pièce de commande 24 de l'embout 23 afin de désolidariser l'action ou de supprimer la contrainte, et le cas échéant la précontrainte, de l'organe élastique 12 sur chaque élément de blocage, lui permettant de sortir le corps support 2 du carter 1 et d'enlever les fils 5, 5' en faisant simplement basculer chaque élément de pivotement en sens inverse, par exemple en appuyant sur leurs faces de contact respectives 110, 110'.

Les éléments constitutifs de la tête, et notamment le corps support 2 et le carter 1 peuvent être réalisés en tout matériau et plus particulièrement pour ce qui concerne le carter 1, de préférence, à partir d'une matière métallique ou plastique et pour ce qui concerne le corps support 2, de préférence, à partir d'une matière plastique. Plus particulièrement, de préférence, les éléments de blocage 3 peuvent être réalisés à partir d'une matière métallique.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection des revendications annexés

## Revendications

1. Tête de coupe rotative à fils pour débroussailleuse, coupe-herbe, coupe-bordure, taille-haie ou analogue, ladite tête comprenant, d'une part, un moyeu (18, 19) s'étendant centralement et axialement dans cette dernière pour recevoir un arbre d'entraînement (20) de sorte à permettre, grâce à des moyens de liaison et de transmission du couple d'entraînement (21, 22), l'entraînement en rotation de ladite tête autour de son axe de rotation (X) et des moyens de verrouillage axial (23, 24, 28) de la tête sur l'arbre d'entraînement (20) et, d'autre part, un carter (1) abritant un corps support (2) qui comprend un système de blocage (3, 3', 4, 4', 12) d'au moins deux fils (5, 5') de coupe ou de tonte courts ou longs et, éventuellement, un axe d'enroulement (6), de préférence solidaire du corps support (2), permettant, le cas échéant, l'enroulement de chaque fil (5, 5') long dans ladite tête qui comprend en outre des moyens de connexion (7, 8) entre le carter (1) et le corps support (2), et dont ledit moyeu (18, 19) est solidaire du carter (1) et/ou du corps support (2) et ledit carter comprend au moins deux orifices (9, 9') pour le passage desdits fils au travers de ce dernier, tête où le système de blocage (3, 3', 4, 4', 12) comprend, d'une part, au moins deux éléments de blocage (3, 3') mobiles, indépendants l'un de l'autre, et associés chacun à une surface de serrage (4, 4') intégrée dans le corps support (2) et comprenant une face de serrage (10, 10') et une face d'appui (11, 11') et, **caracterisée en ce que** d'autre part, un unique organe élastique (12) capable d'exercer et d'appliquer une contrainte sur la face d'appui (11, 11') de chaque élément de blocage (3, 3') permettant de serrer et de bloquer chaque fil (5, 5') entre la face de serrage (10, 10') de l'élément de blocage (3, 3') concerné et la surface de serrage (4, 4') associée et **en ce que**, éventuellement, le corps support (2) et le carter (1) sont adaptés pour être montés en rotation l'un par rapport à l'autre, en vue de permettre, le cas échéant, l'enroulement de chaque fil (5, 5') long, à l'état de serrage et de blocage, autour de l'axe d'enroulement (6).

2. Tête, suivant la revendication 1, **caractérisée en ce que** chaque élément de blocage (3, 3') est monté pivotant autour d'un axe de pivotement (13, 13') et **en ce que** chaque axe de pivotement (13, 13') est soit solidaire de l'élément de blocage (3, 3') concerné et apte à être monté dans un palier (14, 14') fixé sur le corps support (2) par l'intermédiaire d'un support de palier (141, 141'), soit solidaire du corps support (2) et apte à être monté dans un palier fixé ou intégré dans l'élément de blocage (3, 3') concerné.

3. Tête, suivant la revendication 2, **caractérisée en ce que** chaque surface de serrage (4, 4') s'étend dans un plan sensiblement perpendiculaire ou incliné par rapport à l'axe de rotation (X) de ladite tête et **en ce que** l'axe de pivotement (13, 13') de chaque élément de blocage (3, 3') s'étend sensiblement parallèlement auxdites surfaces de serrage.

4. Tête, suivant l'une quelconque des revendications 2 à 3, **caractérisée en ce que** chaque axe de pivotement (13, 13') est solidaire de l'élément de blocage (3, 3') concerné, chaque support de palier (141, 141') présentant au moins une ouverture d'insertion de l'axe de pivotement (13, 13') dans le palier (14, 14') dudit support et **en ce que** chaque ouverture d'insertion est délimitée par des parois déformables élastiquement (140, 140') de sorte que l'axe de pivotement (13, 13') de chaque élément de blocage (3, 3') puisse être inséré dans le palier (14, 14') concerné par emboîtement élastique réversible, ce en vue notamment de permettre le démontage de chaque élément de blocage (3, 3') du corps support (2).

5. Tête, suivant l'une quelconque des revendications 2 à 4, **caractérisée en ce que** chaque élément de blocage (3, 3') présente deux premières faces latérales opposées et deux secondes faces opposées sensiblement perpendiculaires auxdites premières faces, dont l'une desdites secondes faces opposées forme la face de serrage (10, 10') et l'autre seconde face opposée forme la face d'appui (11, 11') et **en ce que** l'axe de pivotement (13, 13') de chaque élément de blocage (3, 3') traverse sensiblement perpendiculairement lesdites premières faces et est constitué par deux axes ou tourillons latéraux fixés chacun sur l'une desdites premières faces.

6. Tête, suivant la revendication 5, **caractérisée en ce que** chaque support de palier (141, 141') comprend deux flasques en vis-à-vis intégrant chacun un palier (14, 14') apte à recevoir, sensiblement perpendiculairement auxdits flasques, l'un des deux axes ou tourillons latéraux de l'élément de blocage (3, 3') concerné de sorte que chaque élément de blocage soit apte à pivoter entre les deux flasques correspondants et **en ce que** chaque surface de serrage (4, 4') s'étend entre les deux flasques de l'un desdits supports de palier (141, 141'), l'espace séparant lesdits flasques formant un passage de réception et de guidage, s'étendant de préférence radialement par rapport à l'axe de rotation de la tête, pour chaque fil (5, 5') dans le corps support (2) en vue de son serrage et blocage.

7. Tête, suivant l'une quelconque des revendications 2 à 6, **caractérisée en ce que** l'axe d'enroulement (6) est fixé dans le corps support (2) et consiste en une paroi périphérique, de préférence de forme cylindrique, comprenant deux ouvertures de passage (15, 15') permettant le passage de chaque fil (5, 5') à travers l'une de ces dernières et **en ce que** ladite tête comprend deux chambres sensiblement concentriques, à savoir une chambre centrale (16) délimitée entre le moyeu (18, 19) et la paroi périphérique (6) et recevant le système de blocage (3, 3', 4, 4', 12) et une chambre périphérique (17) délimitée entre ladite paroi périphérique et la paroi interne du carter (1) recevant, le cas échéant, l'enroulement de chaque fil (5, 5').

8. Tête, suivant la revendication 7, **caractérisée en ce que** la paroi périphérique (6) présente une forme cylindrique, dont l'une des faces d'extrémité est ouverte et l'autre face d'extrémité est fermée par un fond (200) et **en ce que**, le cas échéant, chaque palier (14, 14') est fixé sur ledit fond.

9. Tête, suivant l'une quelconque des revendications 1 à 8, **caractérisée en ce que** le moyeu (18, 19) comprend, d'une part, une première partie de moyeu (18) solidaire ou intégrée dans le carter (1) et une seconde partie de moyeu (19) solidaire ou intégrée dans le corps support (2) et, d'autre part, des moyens de connexion (7, 8) permettant de connecter lesdites première et seconde parties de moyeu (18, 19) entre elles et dans le prolongement l'une de l'autre en empêchant leur rotation l'une par rapport à l'autre, lesdits moyens de connexion formant également les moyens de connexion (7, 8) entre ledit carter (1) et ledit corps de support (2) de sorte à permettre leur connexion ensemble, avec blocage en rotation l'un par rapport à l'autre, pour autoriser la rotation de la tête verrouillée axialement sur l'arbre d'entraînement (20) ou leur déconnexion pour permettre le démontage de la tête ou l'accès aux éléments de blocage (3, 3') ou, dans le cas où le corps support (2) et le carter (1) sont adaptés pour être montés en rotation l'un par rapport à l'autre, l'enroulement de chaque fil (5, 5') à l'état de leur insertion avec serrage et blocage dans la tête.

10. Tête, suivant la revendication 9, **caractérisée en ce que** les moyens de connexion (7, 8) consistent en des stries pratiquées dans chaque partie de moyeu (18, 19).

11. Tête, suivant l'une quelconque des revendications 1 à 10, **caractérisé en ce que** l'unique organe élastique est un unique ressort hélicoïdal (12) entourant coaxialement le moyeu (18, 19), sur toute ou partie de sa longueur, ledit moyeu traversant axialement ledit ressort hélicoïdal.

12. Tête, suivant la revendication 11, **caractérisé en ce que** ledit ressort est maintenu axialement entre, d'une part, une première face de butée (29) solidaire du carter (1) et, d'autre part, soit, à l'état d'insertion de chaque fil (5, 5'), chaque face d'appui (11, 11') des éléments de blocage (3, 3') en exerçant une contrainte de serrage sur ces derniers, soit à l'état de non insertion des fils (5, 5'), une seconde face de butée (30, 30') formant une butée empêchant le ressort (12) de venir au contact desdites faces d'appui des éléments de blocage (3, 3').

13. Tête, suivant la revendication 12, **caractérisé en ce que** la première face de butée (29) est réglable en écartement axial par rapport à chaque face d'appui (11, 11') ou, le cas échéant, à la seconde face de butée (11, 11') de sorte à pouvoir régler la force de rappel de l'unique ressort hélicoïdal (12) et donc la contrainte exercée par ce dernier sur chaque élément de blocage (3, 3').

14. Ensemble composé d'une tête de coupe rotative à fils, pour débroussailleuse, coupe-herbe, coupe-bordure, taille-haie ou analogue, et d'un arbre d'entraînement (20) pour appareil de coupe portable motorisé, ledit arbre d'entraînement (20) étant apte à être monté dans le moyeu (18, 19) de ladite tête pour assurer la transmission du couple d'entraînement à cette dernière, ladite tête présentant les caractéristiques définies suivant l'une quelconque des revendications 1 à 13 précitées,
ensemble **caractérisé en ce que** les moyens de verrouillage axial (23, 24, 28) comprennent des moyens de commande (24) et sont adaptés, d'une part, pour commander et permettre, le cas échéant à partir d'un état d'insertion avec pré-serrage de chaque fil et de précontrainte de l'unique organe élastique, le verrouillage ou le déverrouillage axial de la tête sur l'arbre d'entraînement (20) et, d'autre part, soit, à l'état de verrouillage, pour établir la contrainte serrage de l'organe élastique (12) sur les éléments de blocages (3, 3') permettant de réaliser le serrage et le blocage de chaque fil (5, 5') dans la tête et, à l'état de déverrouillage, pour supprimer ladite contrainte de serrage.

15. Ensemble, suivant la revendication 14, **caractérisé en ce que** les moyens de verrouillage axial (23, 24, 28) sont également adaptés, le cas échéant, soit, à l'état de verrouillage, pour établir la connexion, grâce aux moyens de connexion et de blocage (7, 8), entre les première et seconde parties de moyeu (18, 19), soit, à l'état de déverrouillage, pour établir, sous l'action de l'unique organe élastique (12) exerçant une contrainte allant à l'encontre de ladite connexion, la déconnexion entre lesdites première et seconde parties de moyeu.

16. Ensemble, suivant la revendication 14 ou la revendication 15, **caractérisé en ce que** l'arbre d'entraînement (20) se termine à son extrémité libre par un embout (23) de liaison et **en ce que** les moyens de verrouillage (23, 24, 28) comprennent l'embout (23) et une pièce de commande (24), formant lesdits moyens de commande, montée en rotation, autour de l'axe (X) de ladite tête, sur ledit embout et coopérant avec le corps support (2) de sorte que la rotation de la pièce de commande (24) entraîne un déplacement en translation du corps support (2) dans le carter (1), le long de l'axe de rotation (X) de la tête, permettant, selon le sens de rotation de ladite pièce, soit, dans un sens de rotation permettant de réaliser le verrouillage, d'établir ladite contrainte de serrage et, le cas échéant, la connexion entre les première et seconde parties de moyeu (18, 19) soit, dans un sens de rotation réalisant le déverrouillage, de supprimer ladite contrainte de serrage et, le cas échéant, la déconnexion entre lesdites première et seconde parties de moyeu.

17. Ensemble, suivant la revendication 16, **caractérisé en ce que** l'embout (23) comporte un filetage pratiqué sur sa face latérale externe et **en ce que** la pièce de commande (24) comporte un taraudage permettant d'assurer une liaison par vissage entre la pièce de commande (24) et l'embout (23) et la rotation de cette dernière.

18. Ensemble, selon l'une quelconque des revendications 14 à 17, **caractérisé en ce que** les moyens de liaison et de transmission du couple d'entraînement (21, 22) entre l'arbre d'entraînement (20) et le moyeu (18, 19) consistent en des premiers moyens de liaison (21) solidaires de l'arbre d'entraînement (20) et en des seconds moyens de liaison (22) solidaires de la seconde partie de moyeu (19) de sorte que le carter (1), par l'intermédiaire de la première partie de moyeu (18), soit monté librement en rotation sur l'arbre d'entraînement (20) et que le corps support (2) assure, après verrouillage de la pièce de commande (24), la transmission du couple d'entraînement au moyeu (18, 19) et donc à la tête de coupe.

## Patentansprüche

1. Rollschneidkopf mit Drähten für eine(n) Buschschneider, Rasentrimmer, Kantentrimmer, Heckenschere oder dergleichen, wobei der Kopf einerseits eine Nabe (18, 19), die sich zentral und axial in dieser letztgenannten erstreckt, um eine Antriebswelle (20), um mit Hilfe von Verbindungs- und Übertragungsmitteln des Antriebsdrehmoments (21, 22) den Drehantrieb des Kopfes um seine Drehachse (X) zu ermöglichen, und Mittel zur axialen Verriegelung (23, 24, 28) des Kopfes auf der Antriebswelle (20) aufzunehmen, und andererseits ein Gehäuse (1) umfasst, das einen Stützkörper (2) beinhaltet, der ein Blockiersystem (3, 3`, 4, 4`, 12) mindestens zweier kurzer oder langer Schneid- oder Mähdrähte (5, 5') und eventuell eine Wickelachse (6) umfasst, die vorzugsweise mit dem Stützkörper (2) verbunden ist und gegebenenfalls das Aufwickeln jedes langen Drahtes (5, 5') in dem Kopf ermöglicht, der ferner Anschlussmittel (7, 8) zwischen dem Gehäuse (1) und dem Stützkörper (2) umfasst, und dessen Nabe (18, 19) mit dem Gehäuse (1) und/oder dem Stützkörper (2) verbunden ist, wobei das Gehäuse mindestens zwei Öffnungen (9, 9') für die Durchführung der Drähte durch dieses letztgenannte umfasst,
wobei bei dem Kopf das Blockiersystem (3, 3', 4, 4', 12) einerseits mindestens zwei bewegliche Blockierelemente (3, 3'), die voneinander unabhängig sind und jeweils mit einer Klemmoberfläche (4, 4') verbunden sind, die in den Stützkörper (2) integriert ist, und umfassend eine Klemmfläche (10, 10') und eine Stützfläche (11, 11`), umfasst, **dadurch gekennzeichnet, dass** es andererseits ein einziges elastisches Element (12) umfasst, das geeignet ist, eine Spannung auf die Stützfläche (11, 11`) jedes Blockierelements (3, 3') auszuüben und anzulegen, die es ermöglicht, jeden Draht (5, 5') zwischen der Klemmfläche (10, 10') des betreffenden Blockierelements (3, 3') und der zugehörigen Klemmoberfläche (4, 4') festzuklemmen und zu blockieren, und dass eventuell der Stützkörper (2) und das Gehäuse (1) dazu vorgesehen sind, in Drehung zueinander montiert zu sein, um gegebenenfalls das Aufwickeln jedes langen Drahtes (5, 5') im Klemm- und Blockierzustand um die Wickelachse (6) zu ermöglichen.

2. Kopf nach Anspruch 1, **dadurch gekennzeichnet, dass** jedes Blockierelement (3, 3') schwenkbar um eine Schwenkachse (13, 13') montiert ist, und dass jede Schwenkachse (13, 13') entweder mit dem betreffenden Blockierelement (3, 3') verbunden und geeignet ist, in einem Lager (14, 14') montiert zu werden, das auf dem Stützkörper (2) mit Hilfe einer Lagerstütze (141, 141`) befestigt ist, oder mit dem Stützkörper (2) verbunden und geeignet ist, in einem Lager montiert zu werden, das in dem betreffenden Blockierelement (3, 3') befestigt oder eingebaut ist.

3. Kopf nach Anspruch 2, **dadurch gekennzeichnet, dass** sich jede Klemmoberfläche (4, 4') in einer Ebene im Wesentlichen senkrecht oder geneigt zur Drehachse (X) des Kopfes erstreckt, und dass sich die Schwenkachse (13, 13') jedes Blockierelements (3, 3') im Wesentlichen parallel zu den Klemmoberflächen erstreckt.

4. Kopf nach einem der Ansprüche 2 bis 3, **dadurch gekennzeichnet, dass** jede Schwenkachse (13, 13') mit dem betreffenden Blockierelement (3, 3') verbunden ist, wobei jede Lagerstütze (141, 141') mindestens eine Öffnung zum Einsetzen der Schwenkachse (13, 13') in das Lager (14, 14') der Stütze aufweist, und dass jede Einsetzöffnung von elastisch verformbaren Wänden (140, 140') begrenzt ist, so dass die Schwenkachse (13, 13`) jedes Blockierelements (3, 3`) in das betreffende Lager (14, 14') durch reversibles elastisches Einstecken eingefügt werden kann, um insbesondere die Demontage jedes Blockierelements (3, 3') vom Stützkörper (2) zu ermöglichen.

5. Kopf nach einem der Ansprüche 2 bis 4, **dadurch gekennzeichnet, dass** jedes Blockierelement (3, 3') zwei erste gegenüberliegende Seitenflächen und zwei zweite gegenüberliegende Seitenflächen, die im Wesentlichen senkrecht zu den ersten Flächen sind, aufweist, wobei eine der zweiten gegenüberliegenden Flächen die Klemmfläche (10, 10') und die andere zweite gegenüberliegende Fläche die Stützfläche (11, 11`) bildet, und dass die Schwenkachse (13, 13') jedes Blockierelements (3, 3') im Wesentlichen senkrecht durch die ersten Flächen hindurchgeht und von zwei seitlichen Achsen oder Drehzapfen gebildet ist, die jeweils auf einer der ersten Flächen befestigt sind.

6. Kopf nach Anspruch 5, **dadurch gekennzeichnet, dass** jede Lagerstütze (141, 141`) zwei gegenüberliegende Flansche umfasst, die jeweils ein Lager (14, 14') einschließen, das geeignet ist, im Wesentlichen senkrecht zu den Flanschen eine der beiden seitlichen Achsen oder Drehzapfen des betreffenden Blockierelements (3, 3') aufzunehmen, so dass jedes Blockierelement geeignet ist, zwischen den beiden entsprechenden Flanschen zu schwenken, und dass sich jede Klemmoberfläche (4, 4') zwischen den beiden Flanschen einer der Lagerstützen (141, 141') erstreckt, wobei der Raum zwischen den Flanschen einen Aufnahme- und Führungsdurchgang, der sich vorzugsweise radial zur Drehachse des Kopfes erstreckt, für jeden Draht (5, 5') im Stützkörper (2) bildet, um diesen festzuklemmen und zu blockieren.

7. Kopf nach einem der Ansprüche 2 bis 6, **dadurch gekennzeichnet, dass** die Wickelachse (6) in dem Stützkörper (2) befestigt ist und in einer Umfangswand von vorzugsweise zylindrischer Form besteht, umfassend zwei Durchgangsöffnungen (15, 15'), die die Durchführung jedes Drahtes (5, 5') durch eine dieser letztgenannten ermöglichen, und dass der Kopf zwei im Wesentlichen konzentrische Kammern umfasst, nämlich eine zentrale Kammer (16), die zwischen der Nabe (18, 19) und der Umfangswand (6) begrenzt ist und das Blockiersystem (3, 3', 4, 4', 12) aufnimmt, und eine Umfangskammer (17), die zwischen der Umfangswand und der Innenwand des Gehäuses (1) begrenzt ist und gegebenenfalls die Wicklung jedes Drahtes (5, 5') aufnimmt.

8. Kopf nach Anspruch 7, **dadurch gekennzeichnet, dass** die Umfangswand (6) eine zylindrische Form aufweist, bei der eine der Endflächen offen und die andere Endfläche durch einen Boden (200) geschlossen ist, und dass gegebenenfalls jedes Lager (14, 14') am Boden befestigt ist.

9. Kopf nach einem der Ansprüche 1 bis 8, **dadurch gekennzeichnet, dass** die Nabe (18, 19) einerseits einen ersten Nabenteil (18), der mit dem Gehäuse (1) verbunden oder in dieses integriert ist, und einen zweiten Nabenteil (19), der mit dem Stützkörper (2) verbunden oder in diesen integriert ist, und andererseits Anschlussmittel (7, 8) umfasst, die es ermöglichen, den ersten und den zweiten Nabenteil (18, 19) miteinander und in der Verlängerung zueinander zu verbinden, wobei ihre Drehung zueinander vermieden wird, wobei die Anschlussmittel auch die Anschlussmittel (7, 8) zwischen dem Gehäuse (1) und dem Stützkörper (2) bilden, um ihren Zusammenschluss mit Drehfeststellung zueinander zu ermöglichen, um die Drehung des axial auf der Antriebswelle (20) verriegelten Kopfes zu gestatten, oder ihre Trennung zu ermöglichen, um die Demontage des Kopfes oder den Zugang zu den Blockierelementen (3, 3') zu ermöglichen, oder falls der Stützkörper (2) und das Gehäuse (1) dazu vorgesehen sind, in Drehung zueinander montiert zu werden, das Aufwickeln jedes Drahtes (5, 5') im Zustand ihres Einsetzens mit Festklemmen und Blockieren im Kopf zu ermöglichen.

10. Kopf nach Anspruch 9, **dadurch gekennzeichnet, dass** die Anschlussmittel (7, 8) in Rillen bestehen, die in jedem Nabenteil (18, 19) vorgesehen sind.

11. Kopf nach einem der Ansprüche 1 bis 10, **dadurch gekennzeichnet, dass** das einzige elastische Element eine einzige Spiralfeder (12) ist, die koaxial die Nabe (18, 19) auf der Gesamtheit oder einem Teil ihrer Länge umgibt, wobei die Nabe axial durch die Spiralfeder hindurchgeht.

12. Kopf nach Anspruch 11, **dadurch gekennzeichnet, dass** die Feder axial zwischen einerseits einer ersten Anschlagfläche (29), die mit dem Gehäuse (1) verbunden ist, und andererseits, entweder im eingesetzten Zustand jedes Drahtes (5, 5'), jeder Stützfläche (11, 11`) der Blockierelemente (3, 3'), wobei eine Spannkraft auf diese letztgenannten ausgeübt wird, oder, im nicht eingesetzten Zustand der Drähte (5, 5'), einer zweiten Anschlagfläche (30, 30') gehalten wird, die einen Anschlag bildet, der die Feder (12) daran hindert, mit den Stützflächen der Blockierelemente (3, 3') in Kontakt zu kommen.

13. Kopf nach Anspruch 12, **dadurch gekennzeichnet, dass** die erste Anschlagfläche (29) im Axialabstand zu jeder Stützfläche (11, 11') oder gegebenenfalls zu der zweiten Anschlagfläche (11, 11') einstellbar ist, um die Rückstellkraft der einzigen Spiralfeder (12) und somit die von dieser letztgenannten auf jedes Blockierelement (3, 3') ausgeübte Spannung regeln zu können.

14. Einheit, bestehend aus einem Rollschneidkopf mit Drähten für eine(n) Buschschneider, Rasentrimmer, Kantentrimmer, Heckenschere oder dergleichen, und einer Antriebswelle (20) für ein tragbares motorisiertes Schneidgerät, wobei die Antriebswelle (20) geeignet ist, in der Nabe (18, 19) des Kopfes montiert zu werden, um die Übertragung des Antriebsdrehmoments auf diese letztgenannte zu gewährleisten, wobei der Kopf die nach einem der vorgenannten Ansprüche 1 bis 13 definierten Merkmale aufweist,
wobei die Einheit **dadurch gekennzeichnet ist, dass** die Axialverriegelungsmittel (23, 24, 28) Steuermittel (24) umfassen und dazu geeignet sind, einerseits gegebenenfalls aus einem eingesetzten Zustand mit Vorklemmen jedes Drahtes und Vorspannung des einzigen elastischen Elements die axiale Verriegelung oder Entriegelung des Kopfes auf der Antriebswelle (20) zu steuern und zu ermöglichen, und andererseits entweder im Verriegelungszustand die Klemmspannung des elastischen Elements (12) auf den Blockierelementen (3, 3') herzustellen, die es ermöglicht, das Festklemmen und Blockieren jedes Drahtes (5, 5') durchzuführen, und im Entriegelungszustand die Klemmspannung zu unterbinden.

15. Einheit nach Anspruch 14, **dadurch gekennzeichnet, dass** die Axialverriegelungsmittel (23, 24, 28) gleichermaßen geeignet sind, gegebenenfalls entweder im Verriegelungszustand, dank der Anschluss- und Blockiermittel (7, 8) den Anschluss zwischen dem ersten und dem zweiten Nabenteil (18, 19) zu verwirklichen, oder im Entriegelungszustand unter der Wirkung des einzigen elastischen Elements (12), das eine Spannung gegen den Anschluss ausübt, die Trennung zwischen dem ersten und dem zweiten Nabenteil herzustellen.

16. Einheit nach Anspruch 14 oder 15, **dadurch gekennzeichnet, dass** die Antriebswelle (20) an ihrem freien Ende mit einem Verbindungsansatz (23) endet, und dass die Verriegelungsmittel (23, 24, 28) den Ansatz (23) und ein Steuerteil (24) umfassen, das die Steuermittel bildet, in Drehung um die Achse (X) des Kopfes auf dem Ansatz montiert ist und mit dem Stützkörper (2) zusammenwirkt, so dass die Drehung des Steuerteils (24) zu einer Translationsbewegung des Stützkörpers (2) im Gehäuse (1) entlang der Drehachse (X) des Kopfes führt, die es je nach Drehrichtung des Teils entweder in einer Drehrichtung, die es ermöglicht, die Verriegelung durchzuführen, ermöglicht, die Klemmspannung und gegebenenfalls den Anschluss zwischen dem ersten und zweiten Nabenteil (18, 19) durchzuführen, oder in eine Drehrichtung, die die Entriegelung durchführt, die Klemmspannung zu unterbinden und gegebenenfalls die Trennung zwischen dem ersten und dem zweiten Nabenteil durchzuführen.

17. Einheit nach Anspruch 16, **dadurch gekennzeichnet, dass** der Ansatz (23) ein Gewinde umfasst, das in seiner äußeren Seitenfläche vorgesehen ist, und dass das Steuerteil (24) ein Innengewinde umfasst, das es ermöglicht, eine Schraubverbindung zwischen dem Steuerteil (24) und dem Ansatz (23) und die Drehung dieses letztgenannten zu gewährleisten.

18. Einheit nach einem der Ansprüche 14 bis 17, **dadurch gekennzeichnet, dass** die Verbindungs- und Übertragungsmittel des Antriebsdrehmoments (21, 22) zwischen der Antriebswelle (20) und der Nabe (18, 19) in ersten Verbindungsmitteln (21), die mit der Antriebswelle (20) verbunden sind, und in zweiten Verbindungsmitteln (22) bestehen, die mit dem zweiten Nabenteil (19) verbunden sind, so dass das Gehäuse (1) mit Hilfe des ersten Nabenteils (18) frei drehbar auf der Antriebswelle (20) montiert ist, und dass der Stützkörper (2) nach Verriegeln des Steuerteils (24) die Übertragung des Antriebsdrehmoments auf die Nabe (18, 19) und somit auf den Schneidkopf gewährleistet.

## Claims

1. Rotary cutting head with wires for a brush cutter, a grass trimmer, an edge trimmer, a hedge trimmer or the like, with said head comprising, on the one hand, a hub (18, 19) extending centrally and axially into the latter for accommodating a drive shaft (20) in such a way as to make possible, using means for connecting and transmitting the drive torque (21, 22), the driving in rotation of said head around its axis (X) of rotation and axial locking means (23, 24, 28) of the head on the drive shaft (20), and, on the other hand, a housing (1) sheltering a support body (2) that comprises a locking system (3,3', 4, 4`, 12) of at least two wires (5, 5') for cutting or for long or short mowing, and, optionally, a winding shaft (6), preferably integral with the support body (2), making possible, if necessary, the winding of each long wire (5, 5') in said head that further comprises connecting means (7, 8) between the housing (1) and the support body (2), and of which said hub (18, 19) is integral with the housing (1) and/or the support body (2), and said housing comprises at least two openings (9, 9') for the passage of said wires through the latter,
the head wherein the locking system (3, 3', 4, 4', 12) comprises, on the one hand, at least two movable locking elements (3, 3'), independent of one another, and each associated with a tightening surface (4, 4') integrated into the support body (2) and comprising a tightening face (10, 10') and a support face (11, 11') and, **characterised in that**, on the other hand, a single elastic element (12) that is capable of exerting and applying stress on the support face (11, 11') of each locking element (3, 3') making it possible to tighten and to lock each wire (5, 5') between the tightening face (10, 10') of the locking element (3,3') in question and the associated tightening surface (4, 4'), and **in that** optionally the support body (2) and the housing (1) are suitable for being mounted in rotation relative to one another for the purpose of making possible, if necessary, the winding of each long wire (5, 5'), in the tightening and locking state, around the winding shaft (6).

2. Head according to claim 1, **characterised in that** each locking element (3, 3') is mounted to pivot around a pivoting shaft (13, 13') and wherein each pivoting shaft (13, 13') is either integral with the locking element (3,3') in question and able to be mounted in a bearing (14, 14') fixed onto the support body (2) by means of a bearing support (141, 141') or integral with the support body (2) and able to be mounted in a bearing that is fixed or integrated in the locking element (3, 3') in question.

3. Head according to claim 2, **characterised in that** each tightening surface (4, 4') extends in a plane that is essentially perpendicular or inclined relative to the axis (X) of rotation of said head and wherein the pivoting shaft (13, 13') of each locking element (3, 3') extends essentially parallel to said tightening surfaces.

4. Head according to any one of claims 2 to 3, **characterised in that** each pivoting shaft (13, 13') is integral with the locking element (3, 3') in question, with each bearing support (141, 141') having at least one opening for insertion of the pivoting shaft (13, 13') in the bearing (14, 14') of said support and wherein each opening of insertion is delimited by elastically deformable walls (140, 140') in such a way that the pivoting shaft (13, 13') of each locking element (3, 3') can be inserted into the bearing (14, 14') in question by reversible elastic interlocking, this for the purpose in particular of making possible the disassembly of each locking element (3, 3') of the support body (2).

5. Head according to any one of claims 2 to 4, **characterised in that** each locking element (3, 3') has two first opposing lateral faces and two second opposing faces that are essentially perpendicular to said first faces, of which one of said second opposing faces forms the tightening face (10, 10') and the other second opposing face forms the support face (11, 11') and **in that** the pivoting shaft (13, 13') of each locking element (3, 3') essentially passes through said first faces in a perpendicular manner and consists of two lateral shafts or journals each fixed onto one of said first faces.

6. Head according to claim 5, **characterised in that** each bearing support (141, 141') comprises two opposite flanges each integrating a bearing (14, 14') that can accommodate, essentially in a perpendicular manner to said flanges, one of the two lateral shafts or journals of the locking element (3, 3') in question in such a way that each locking element is able to pivot between the two corresponding flanges and wherein each tightening surface (4, 4') extends between the two flanges of one of said bearing supports (141, 141'), with the space separating said flanges forming a passage for accommodating and guiding, preferably extending radially relative to the axis of rotation of the head, for each wire (5, 5') in the support body (2) for the purpose of its tightening and locking.

7. Head according to any one of claims 2 to 6, **characterised in that** the winding shaft (6) is fixed in the support body (2) and consists of a peripheral wall, preferably of a cylindrical shape, comprising two passage openings (15, 15') making possible the passage of each wire (5, 5') through one of these openings and wherein said head comprises two essentially concentric chambers, namely a central chamber (16) that is delimited between the hub (18, 19) and the peripheral wall (6) and that accommodates the locking system (3, 3', 4, 4', 12) and a peripheral chamber (17) that is delimited between said peripheral wall and the inner wall of the housing (1) that accommodates, if necessary, the winding of each wire (5, 5').

8. Head, according to claim 7, **characterised in that** the peripheral wall (6) has a cylindrical shape, of which one of the end faces is open and the other end face is closed by a bottom (200) and **in that**, if necessary, each bearing (14, 14') is fixed onto said bottom.

9. Head, according to any one of claims 1 to 8, **characterised in that** the hub (18, 19) comprises, on the one hand, a first hub part (18) that is integral with or integrated in the housing (1) and a second hub part (19) that is integral with or integrated in the support body (2) and, on the other hand, connecting means (7, 8) that make it possible to connect said first and second hub parts (18, 19) with one another and in the extension with one another by preventing their rotation relative to one another, with said connecting means also forming connecting means (7, 8) between said housing (1) and said support body (2) in such a way as to make it possible to connect them together, with locking in rotation relative to one another, for allowing the rotation of the head, locked axially on the drive shaft (20), or their disconnection for making possible, in particular, the disassembly of the head or the access to the locking elements (3, 3') or, in the case where the support body (2) and the housing (1) are suitable for being mounted in rotation relative to one another, the winding of each wire (5,5') in the state of their insertion with tightening and locking in the head.

10. Head according to claim 9, **characterised in that** the connecting means (7, 8) consist of ridges made in each hub part (18, 19).

11. Head according to any one of claims 1 to 10, **characterised in that** the single elastic element is a single helical spring (12) coaxially surrounding the hub (18, 19), over all or part of its length, with said hub axially passing through said helical spring.

12. Head according to claim 11, **characterised in that** said spring is held axially between, on the one hand, a first stop face (29), integral with the housing (1), and, on the other hand, either, in the state of insertion of each wire (5, 5'), each support face (11, 11') of the locking elements (3, 3') by exerting a tightening stress on these elements, or, in the state where the wires (5, 5') are not inserted, a second stop face (30, 30') forming a stop preventing the spring (12) from coming into contact with said support faces of the locking elements (3, 3').

13. Head according to claim 12, **characterised in that** the first stop face (29) can be adjusted by axial spacing relative to each support face (11, 11') or, if necessary, to the second stop face (11, 11') in such a way as to be able to adjust the return force of the single helical spring (12) and therefore the stress exerted by the latter on each locking element (3, 3').

14. Assembly consisting of a rotary cutting head with wires, for a brush cutter, a grass trimmer, an edge trimmer, a hedge trimmer, or the like, and a drive shaft (20) for a portable motorised cutting device, with said drive shaft (20) being able to be mounted in the hub (18, 19) of said head for ensuring the transmission of the drive torque to the latter, with said head having the defined characteristics according to any one of the preceding claims 1 to 13,
the assembly being **characterised in that** the axial locking means (23, 24, 28) comprise control means (24) and are suitable, on the one hand, for controlling and for making possible, if necessary starting from a state of insertion with pre-tightening of each wire and prestressing of the single elastic element, the locking or axial unlocking of the head on the drive shaft (20), and, on the other hand, namely, in the state of locking, for establishing the tightening stress of the elastic element (12) on the locking elements (3, 3') making it possible to implement the tightening and the locking of each wire (5, 5') in the head, and, in the state of unlocking, for eliminating said tightening stress.

15. Assembly according to claim 14, **characterised in that** the axial locking means (23, 24, 28) are also suitable, if necessary, either, in the locking state, for establishing the connection, using means (7, 8) for connection and locking, between the first and second hub parts (18, 19), or, in the unlocking state, for establishing, under the action of the single elastic element (12) exerting stress going against said connection, the disconnection between said first and second hub parts.

16. Assembly according to claim 14 or claim 15, **characterised in that** the drive shaft (20) ends at its free end by a connecting tip (23) and **in that** the locking means (23, 24, 28) comprise the tip (23) and a control piece (24), forming said control means, mounted in rotation, around the axis (X) of said head, on said tip and working with the support body (2) in such a way that the rotation of the control piece (24) brings about a translational movement of the support body (2) in the housing (1), along the axis (X) of rotation of the head, making it possible, according to the direction of rotation of said piece, either, in a direction of rotation making it possible to implement the locking, to establish said tightening stress, and, if necessary, the connection between the first and second hub parts (18, 19), or, in a direction of rotation implementing the unlocking, to eliminate said tightening stress, and, if necessary, the disconnection between said first and second hub parts.

17. Assembly, according to claim 16, **characterised in that** the tip (23) comprises a thread made on its outer lateral face and **in that** the control piece (24) comprises a tapping making it possible to make a connection by screwing between the control piece (24) and the tip (23) and the rotation of the latter.

18. Assembly according to any one of claims 14 to 17, **characterised in that** the means for connecting and transmitting the drive torque (21, 22) between the drive shaft (20) and the hub (18, 19) consist of the first connecting means (21) that are integral with the drive shaft (20) and of the second connecting means (22) that are integral with the second hub part (19) in such a way that the housing (1), by means of the first hub part (18), is mounted freely in rotation on the drive shaft (20) and **in that** the support body (2) ensures, after locking the control piece (24), the transmission of the drive torque to the hub (18, 19) and therefore to the cutting head.
